**Europäisches Patentamt**

(19) **European Patent Office**

**Office européen des brevets**

(11) Publication number : **0 397 139 B1**

(12) # EUROPEAN PATENT SPECIFICATION

(45) Date of publication of patent specification :
**29.11.95 Bulletin 95/48**

(51) Int. Cl.⁶ : **H04J 3/16, H04J 3/12**

(21) Application number : **90108727.0**

(22) Date of filing : **09.05.90**

(54) **Serial transport frame format method.**

(30) Priority : **12.05.89 US 351458**
**10.05.89 US 349716**

(43) Date of publication of application :
**14.11.90 Bulletin 90/46**

(45) Publication of the grant of the patent :
**29.11.95 Bulletin 95/48**

(84) Designated Contracting States :
**AT BE CH DE ES FR GB IT LI NL SE**

(56) References cited :
**EP-A- 0 228 629**
**US-A- 4 701 913**
**DATA COMMUNICATIONS, vol. 16, no. 3, NEW YORK US pages 161 - 169; D.R. RUFFALO: 'UNDERSTANDING T1 BASICS: PRIMER OFFERS PICTURE OF NETWORKING FUTURE'**

(73) Proprietor : **ALCATEL N.V.**
**Strawinskylaan 341,**
**(World Trade Center)**
**NL-1077 XX Amsterdam (NL)**

(72) Inventor : **Tyrrell, Raymond Eugene**
**7700 Fall Branch Court**
**Raleigh, N.C. 27587 (US)**
Inventor : **Dunning, Stephen Carson**
**31 Francisa Lane**
**Cary, N.C. 27511 (US)**
Inventor : **Sanders, Richard James, Jr.**
**1801 Bridgeport Drive**
**Raleigh, N.C. 27615 (US)**
Inventor : **Hurlocker, Claude Melvin**
**1516 Basewood Drive**
**Raleigh, N.C. 27609 (US)**
Inventor : **Gingell, Michael John**
**113 Trotters Ridge Drive**
**Raleigh, N.C. 27614 (US)**
Inventor : **Jones, Jeffrey Paul**
**300 Killington Drive**
**Raleigh, N.C. 27609 (US)**

(74) Representative : **Kugler, Hermann, Dipl.-Phys.**
**et al**
**Alcatel SEL AG**
**Patent- und Lizenzwesen**
**Postfach 30 09 29**
**D-70449 Stuttgart (DE)**

## Description

The present invention relates to a serial transport frame format method according to the preamble of claim 1 for use in telephony but not necessarily restricted thereto. The serial transport frame format method describes a technique for transmitting serial information comprising a plurality of channels wherein some channels contain data and channel associated control information. Frame synchronization is included in one channel per frame.

A frame format for a time-division multiplexing communication system is known from EP-A2-0 228 629. This format of a communication frame circulating a loop transmission line consists of a main fraim divided in sub-frames. Each of the sub-frames is divided into x time slots, and each of the time slots is constituted by a control bit field of four bits, a data field D of six bits and synchronizing pattern. Details of the control bit field and of the synchronizing pattern are not shown.

From US-A-4 701 913 a frame format of 32 channels, each channel comprising 10 bits, is known.

An introduction to frame structures for time-division multiplexing systems is known from D.R. Ruffalo, "Understanding T1 basics.

Primer offers pictures of networking future", Data Communications, March 1987, pages 161-169.

The adoption of the Synchronized Optical Network standard (SONET) within the United States and elsewhere (American National Standards Institute Standard T1.105-1988 entitled "Digital Hierarchy Optical Interface Rates and Formats Specification"), defines a standard for the transfer of information by means of optical fiber. With such a standard there is a need for transferring information associated with lower speed telephony standards such as the digital signal standard, or DS-X standard (where "X" is an integer, such as 0, 1, 2 and 3).. The DS-X standard is commonly used in telephony, with DS-0 directed to channels that operate at 64 kilobits per second (kbits/sec), DS-1 directed to channels operating at 1.544 megabits/second (mbits/sec), DS-2 operating at 6.312 mbits/sec, and DS-3 operating at 44.736 mbits/sec. With the DS-X standard, each channel comprises 8 bits of data while the signalling and control information associated with such a channel is typically inserted at the least significant bit of designated frames of that channel in what is commonly referred to as a "rob-bit" method.

In Europe, the signalling and control information associated with a digital channel is typically presented in a designated repeating frame of that channel so that the data is not compromised by the signalling and control information.

The SONET standard defines the rates and formats for optical interfaces with the basic signal broken into two main portions, one portion for what is called Transport Overhead and one portion for payload. The Transport Overhead comprises Section Overhead and Line Overhead while the payload contains Path Overhead and payload data. The payload data may be a DS-3 type signal or lower speed DS-0, DS-1C, or DS-2 signals presented in what is called a Virtual Tributary (VT). It is within this payload data that the signalling and control information of the channels is maintained for whatever signalling format is used (e.g. AB or A, B, C, D (ESF) signalling). In SONET, such signalling and control information is stored in a prescribed manner.

However within devices used to interface or communicate with the SONET standard, there is a need to be able to internally serially transfer data in a flexible and reliable manner.

In particular the use of SONET standard has resulted in the creation of terminal multiplexers (TM's), add/drop mutliplexers (ADM's), fiber transmission systems (FTS) and the like for placement of information onto a fiber optic as well as for demultiplexing the information transmitted across a fiber optic so as to obtain the various S-X channels. Each TM, ADM, and FTS requires that information be rapidly transferred between various modules within these devices so as to be operated on by these modules. Therefore it is a principal object to devise a serial transport frame format method for transferring such internal information in a fast, flexible, reliable, and cost-effective manner. A further object of the present invention is to give details of the control bit field and of the synchronizing pattern. These objects are achieved as set forth in the claim 1. Further embodiments of this solution are set forth in the subclaims.

The invention offers the advantage that both the data and the associated channel control information (e.g. signalling and timing information) are transparently conveyed between any two modules. It is an efficient method for the transfer of telephony channel information between modules associated with devices that operate on this data and in particular for such devices used in conjunction with interfacing and interacting with the SONET standard for the exchange of information.

The serial transport frame format provides for the transfer of information in a frame format wherein frame synchronization information is provided in a standardized form. The frame format also provides for the transfer of general control information in a standardized form. This general control information is also in the form of data and associated channel control information, the latter potentially including data valid (V) and interrupt (I) bits and addressing information. Each control channel can be used to communicate control functions between modules within any device. Further information concerning the VI control channel is presented in a European Application entitled "Embedded Control Technique for Distributed Control Systems", inventor: Hal Thorne. This application is based on the U.S. application Ser.No. 349 716, filed on May 10, 1989.

The serial transport frame format defines a frame comprising 32 channels of information, each channel comprising 16 bits. Each frame is typically generated at a frequency of 4.096 megahertz.

The first channel of each frame preferably contains a synchronization word while the last channel may optionally contain general maintenance or control information. This maintenance and control information can provide codes associated with looping so as to isolate faults as well as to control communications between modules connected at respective ends of a serial bus (link) associated with the serial transport frame format. Regardless of the channel, a first portion of the channel contains data while a second portion of the same channel contains associated control information. Such control information may include timing information associated with that channel of data.

When the channels contain DS-O data, the first 8 bits of each 16 bit channel contains the actual DS-O data (such as voice data) with the remaining bits containing the signalling information (e.g. A, B or A, B, C, D information) and timing information associated with that DS-O channel, as well as channel parity information.

The invention provides a serial transport frame format for transferring data between two locations, such that the data is transferred in channels with associated control information. The associated control information can include signalling information if the data correspond to telephony information. It can also include, depending upon the nature of the channel data, timing information, valid data information, interrupt information, address information and channel parity information.

One channel per frame contains frame synchronization information used by the interconnected modules to determine whether the serial transport frame format is being accurately received. The serial transport frame includes a predetermined number of channels per frame, each channel having a predetermined size. The entire frame is transmitted during a predetermined length of time.

In this manner, a flexible and expandable system for defining serial data is presented which facilitates communications between modules such as those used to implement terminal multiplexers, add/drop multiplexers and the like as used in telephony, and in particular as used in telephony associated with a synchronous optical network.

For a fuller understanding of the nature and objects of the present invention, reference should be made to the following detailed description taken in connection with the accompanying drawings, and in which:

Figure 1    is a block diagram of a fiber transmission system, a terminal multiplexer and an add/drop multiplexer, which combine to form a transmission facility for use within a synchronized optical network standard; and

Figure 2    is a diagram showing the serial transport frame format according to the invention and the data bits associated with it.

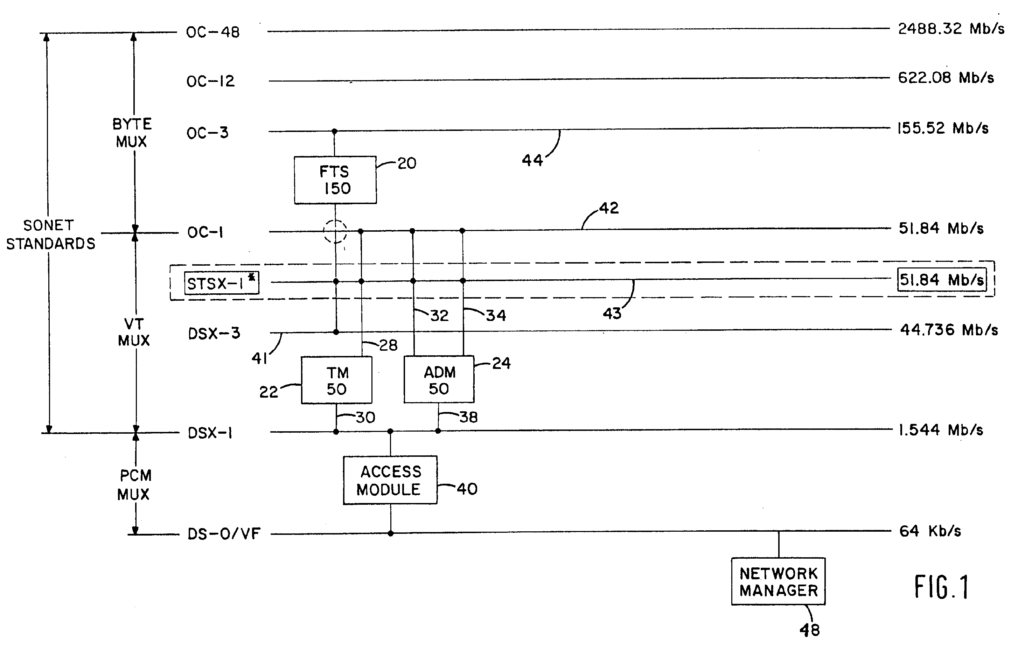

Figure 1 illustrates various devices 20, 22 and 24, that can interface with an optical carrier (fiber optic) transmission medium such as the optical carrier medium operating within the Synchronous Optical Network (SONET) standard adopted by the American National Standards Institute, Inc. (ANSI) as set forth in their standard No. TI.105-1988 entitled "Digital Hierarchy Optical Interface Rates and Formats Specification".

According to the SONET standard an optical carrier level (such as OC-1, OC-3, OC-12, OC-48) is the signal that results from an optical conversion of a Synchronous Transport Signal (STS) operating at the same level. The STS-1 (STS level 1) is defined as the basic building block signal with a transfer rate of 51.840 megabits per second (Mbit/s). Thus an STS-N optical carrier level is simply the level 1 rate multiplied by N, where N is an integer equal to or greater than one. The STS bit stream is presented in a frame where the STS-1 frame comprises 810 bytes which can be visualized as nine rows, each 90 bytes wide with the frame period equal to 125 microseconds.

The first three column comprise what is called transport overhead, which in turn comprises section and line overhead. Section overhead deals with the SONET section layer which is directed to the transport of STS-N frames across the physical medium.

The line overhead deals with the line layer which is directed to the transport of Path layer payload. The payload is a synchronous payload whose envelope can reside across two STS-N envelopes.

It is within this payload that channels of telephonic information, comprising channels conforming to various digital signal standards, are contained. As seen in Figure 1, these standards include DS-O (64 kbits/s), DS-1 (1.544 mbits/s) und DS-3 (44.736 mbits/s).

The fiber transmission system (FTS) 20 is interconnected between an OC-3 channel operating at 155.52 megabits per second and an electrical DS-3 channel operating at 44.736 megabits per second.

The fiber transmission system can also connect to a 51.84 megabits per second electrical interface identified as STSX-1. This interface is an electrical implementation of the synchronized optical network interface (SO-

3

EP 0 397 139 B1

NET).

The terminal multiplexer (TM) 22 has a high speed port 28 operating at 51.84 mbits/s that can be equipped with either an electrical interface (STSX-1 electrical path) or a fiber optic interface for operation with the OC-1 SONET Standard. A low speed port 30 of the terminal mutliplexer is interfaced with a DSX-1 electrical telephony standard operating at 1.544 megabits per second. Each DS-1 interface can incorporate up to 24 DS-0 channels each operating at 64 kilobits per second. The terminal multiplexer therefor interfaces from 1 - 28 DS1 channels with one OC-1 or one STSX-1 carrier.

The add/drop multiplexer (ADM) 24 is functionally identical to the terminal multiplexer except that the ADM is equipped with east and west high speed interfaces 32 and 34, respectively. The low speed port 38 is similar in operation to the low speed port 30 associated with the terminal multiplexer.

The access module 40 provides conventional interfacing between DS-0 channels operating at 64 kilobits per second and DS-1 channels operating at 1.544 megabits per second.

The terminal multiplexer 22 add/drop multiplexer 24, and the fiber transmission system 20 each use serial busses which utilize the serial transport frame format of the present invention. By each device using the same serial transport frame format for the exchange of information within modules comprising the respective device, a straightforward implementation for transferring information between modules is achieved.

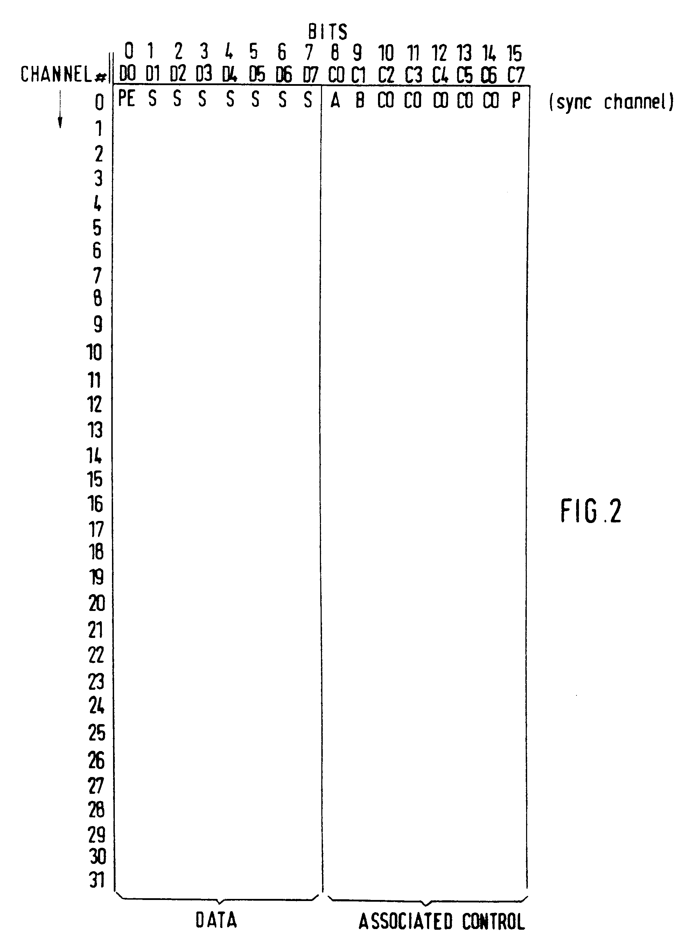

The basic nature of the serial transport frame format is shown in Figure 2. As seen there, sixteen bits comprise each channel of information. There are 32 channels per frame. The first bit of each channel (bit #0) is the most significant (MSB) and the sixteenth bit is the least significant (LSB).

The first eight bits of some of the channels comprise data (bits D0 through D7) while the remaining bits represent associated control information (bits C0 through C7). The associated control bits may represent any type of control information depending upon the nature of the associated channel data and the needs of the modules interconnected to a serial bus transferring information within this format. This associated control information may comprise address information regarding the channel data, timing information regarding the channel data, data valid and interrupt bits (V and I bits) and parity information regarding the channel. In all situations, the associated control bits represent information respecting the channel data or are "don't care" bits; i.e., bits that convey no particular information regarding the channel data.

Channel zero of each serial transport frame format represents synchronization data and associated control information.

Each terminal multiplexer 22 and each add/drop multiplexer 24 can interface up to 28 DS-1 channels each operating at 1.544 megabits per second with one STSX-1 or one OC-1 channel. Each serial bus is called a serial link and is identified by a number corresponding to its link number. A serial link conveys information in the serial transport frame format, and thus 32 channels are associated with each serial link.

In the following examples are given which show how the channels of the various serial links are used in accordance to the invention.

For the terminal multiplexer TM and the add/drop multiplexer ADM shown in Fig. 1 the links are assigned the following responsibilities set forth in Table 1:

4

<u>TABLE 1</u>

<u>Serial Link Assignment for TM and ADM devices</u>

| <u>Serial Link #</u> | <u>Assignment</u> |
|---|---|
| 0 | DS-1 #1 |
| 1 | DS-1 #2 |
| 2 | DS-1 #3 |
| . | .... .. |
| . | .... .. |
| 27 | DS-1 #28 |
| 28 | DTAU (digitial test access unit for DS-1 test access) |
| 29 | Network Manager |
| 30 | time slot interchanger to controller |
| 31 | time slot interchanger to controller |

As noted above, each link comprises 32 channels and channel 0 of each link contains synchronization information. For TM and ADM applications, the associated control information for channel zero of each link is set forth in Table 2 and Figure 2.

<u>TABLE 2</u>

<u>Channel 0 Bit Definitions for all TM and ADM Serial Links</u>

| PE | S | S | S | S | S | S | S | A | B | CO | CO | CO | CO | CO | P |
|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 |

where
PE is parity error bit.
S is synchronization bit pattern (Barker Code)
A and B represent the A or B select status bit (A transport path or B transport path)
CO represents the composite clock offset value bit
P represents the channel parity bit
For channel 0, channel parity bit P is of even parity on the 16 bit channel. For channels 1 - 31 this bit is odd parity on the respective 16 bit channel. When channel parity errors are detected in any serial transport frame channel by an associated serial receiver, the corresponding serial transmitter sends an active parity error bit to the source. This error bit indicates to the source that problems may exist with the transmitter. When predetermined channel parity error thresholds are exceeded, a system switchover can be initiated by a controller.

The parity bit (P) is associated with the current serial frame transport while the parity error bit (PE) persists for one frame following the error.

The composite clock offset value associated with channel 0 is accumulated on a multiframe basis consisting of two frames. By using the alternating synchronization pattern to accumulate the composite clock offset bits, 10 bits are accumulated.

The A/B select bits represent which transport media is to be used. In telephony, two transport media paths are typically required to maintain high reliability of any desired communication. These media paths are generally referred to as path A or path B. The A/B select bits are distributed via a broadcast technique from the time slot multiplexer TSM or time slot interchanger TSI associated with controller channel 0. When the serial transport frame generator receives channel 0 from the time slot interchanger parallel bus, the channel is overlaid with new A/B bits, synchronization pattern, composite clock offset value, and parity bits.

Serial Links 0 - 27

For the TM and ADM modules 20 and 22 of Fig. 1, serial links 0 through 27 (not shown) have channels 1 - 31 defined in a manner as set forth in Table 3 (channel 0 is the same for all serial links.

Table 3

Channels 1 - 31 Bit Definitions for TM and ADM Links 0 - 27

Channel 1:
contains the virtual tributary (VT) pointer byte if the SONET Floating VT Mode is selected (see SONET standard).
Channel 2:
Required only for the "FLoating VT Mode".
Channel 3:
Contains the signalling information used by the add/drop multiplexer for through connections, that is connections which pass from east to west without the addition or subtraction by the ADM. The ADM high speed interfaces are provisioned to use this information or to reformat and use the signalling information included as part of the DS-0 channel being inserted. Channel 3 ist also used to insert and extract the DS-1 F bit (the 193rd bit) when terminating a data link conforming to the extended frame (ESF) format. The high speed part is further provisioned to provide a fixed relationship between the F bit sequence and the signalling master frame sync. The DS-1 unit only uses the F bit and the master frame signal (MFS) while ignoring the remaining bits. Channel 3 can also be provisioned to transport the DS-1 193rd bit for bit synchronous applications.
Bits 2 - 5 of channel 3 carry the signalling information in the SONET Standard format, bit 6 contains the F bit (193rd bit), bit 12 contains the multi-frame synchronization signal (high for frames 1 - 12, low for frames 13 - 24), bit 13 contains a bit to indicate twice the frame synchronization frequency (high for frames 1 - 6 and 13 - 18 and low for frames 7 - 12 and 19 - 24) and bit 14 contains the transmit H4 master frame synchronization bit (see SONET Standard) which is a positive edge aligned with the 500 microsecond virtual tributary superframe. Bit 15 is the parity bit which is odd parity on bits 0 - 14. Bits 0, 1 and 7 are reserved for future use and bits 8 - 11 are not assigned.
Channels 4 - 27:
Each channel contains one DS-O channel from DS-0 channel #1 to DS-0 channel #24. Bits 0 - 7 contain the voice or data information while bits 8, 9, 10 and 11 contain the ABCD signalling highway information respectively (ESF signalling). Bit 12 contains the signalling frame synchronization bit (high for frames 6 - 17, low for frames 18 - 5) and bit 13 contains a bit to indicate twice the frame synchronization frequency (high for frames 6 - 11 and 18 - 23 and low for frames 12 - 17 and 24 - 5). Bits 14 and 15 are not assigned.
Channel 28:
This channel is reserved for an add/drop multiplexer core or line shelves and in particular for use as a universal broadcast channel. The line shelf generates the signal and sends it to the time slot interchanger to be broadcast.
Channels 29 and 30:
Are not assigned.
Channel 31:
This channel is used by the terminating devices (such as the DS-1 or line shelves) for communication to the system controller. The data bits are assigned to bits 0 - 7, the valid or V bit is assigned to bit 8, the interrupt or I bit is assigned to bit 9 and the offset bits are assigned to bits 10 - 14. Bit 15 is the parity bit.

Serial Link 28

This link is assigned to the Digital Test Access Unit (DTAU).

Serial Link 29

This link is responsible for communications with a network manager 48. The serial transport frame format channel assignment for channels 1 - 31 are presented below (channel 0 is discusses earlier):

The network assignments for the serial transport frame format channels 1 - 22 are programmable by the TM or ADM which is equipped with a times lot interchanger.

Assignments for channels 1 - 16 are programmable for systems equipped with times lot multiplexers.

Channels 17 - 22 are not accessible by the times lot multiplexer.

The ADM has two sets of overhead channels, one for the east and one for the west. The TM has one set for the incoming signals.

Channel 23:

This channel contains the V and I channel from the TM or ADM controller to the network manager controller.

Channels 24-30:

These channels are not processed by the network manager interface.

Channel 31:

This channel contains the DS-1 transceiver VI channel information.

Serial Links 30 - 31

Serial links 30 and 31 for the TM and ADM devices represent channel assignments for two controllers.

Serial Link 30

Channels 1 - 28:

These channels are used for provisioning or control of DS-1's and/or for line shelves. DS-1's are assigned beginning with channel 1 while the line shelves are assigned beginning with channel 28. The number of each is provisionable. The DS-1's/line shelves use the VI Protocol.

Channel 29:

This channel is used for provisioning and control of the DTAU DS-1.

Channel 30:

This channel is used for provisioning and control of the Network Manager DS-1 port.

Channel 31:

This channel contains the V and I channel to the network manager. This channel is used for communications between the TM or ADM controllers to network manager controller 48 (see Figure 1).

Serial Link 31

The serial transport frame format channel assignments for serial link 31 are presented in Table 6.

TABLE 4

Channels 1 - 31 Assignments for Serial Link 31

Channels 1 - 2

These channels are used for the two orderwire channels in the SONET overhead. For the terminal multiplexer, the channels are the local and express orderwires. For the add/drop multiplexers, both channels are the local orderwires.

Channel 3 - 5

These channels are used for the east OS communications. Three channels are allocated for the 192 kilobits per second OS in the SONET overhead. The extracted channel uses the HDLC protocol.

Channels 6, 13 and 14

These channels are used with the west OS communications. Three channels are allocated for the 192 kilobits per second OS in the SONET overhead. The extracted data channel uses the HDLC protocol.

Channel 7

This channel is used for the 64 kilobits per second common signalling channel. This data channel uses the HDLC protocol. This channel is not used for terminal multiplexers and add/drop multiplexers.

Channel 8

This channel is used as a test channel and provides both transmit and receive functions.

Channels 9 - 11

These channels are broadcast channels.

Channel 12

This channel contains the path tracer from the east or west OC-1/STS-1 interface.

Channel 15

This channel is used for provisioning control of the east OC-1/STS-1. This channel operates in a VI protocol.

Channel 16

This channel is used for provisioning control of the west OC-1/STS-1. This channel operates in a VI protocol.

Channel 17

This channel is used for a 64/4 kilobits per second EOC channel. This data channel uses the HDLC protocol. The ESF 4 kilobits per second serial transport frame link contains a superframe mark and a frame bit.

Channels 18 - 31

These channels are reserved.

The 32 channels of the serial transport frame format are associated with a network manager 48 (Fig. 1) while links 30 and 31 are associated with a controller channel allocation. In particular, link 30 uses channels 1 - 28 for provisioning and control of the 28 DSI channels and/or associated line shelves. Channel 29 of link 30 is used for provisioning and control of the DTAU DS-1 while channel 30 is used for provisioning and control of the network manager DS-1 port.

Channel 31 contains the valid interrupt channel to the network manager. This channel is used for communications between the terminal multiplexer, the add/drop multiplexer, controllers and the network manager controller.

The serial transport frame uses a unique framing pattern for channel 0 for purposes of synchronization. Specifically, the pattern uses bits 1 - 7 with the following binary values:

0 1 0 0 1 1 1. This code is a 7 bit Barker Code. This code is alternated on even and odd frames with its compliment so as to prevent accidental framing on a repeated steady-state pattern.

The synchronization pattern for the even and odd frames is as presented below in Table 5.

## TABLE 5

### Channel 0 Frame Synchronization Pattern

| Bit # | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| Even frame | PE | 0 | 1 | 0 | 0 | 1 | 1 | 1 | x | x | x | x | x | x | x | P |
| Odd frame | PE | 1 | 0 | 1 | 1 | 0 | 0 | 0 | x | x | x | x | x | x | x | P |

P stands for the channel parity bit which is even parity on the 16 bit channel for the current channel and serves as an additional check for correct synchronization The channel parity bit also helps prevent false framing and gives a running measure of possible transmission problems.

The PE bit is a frame parity error bit at bit position 0. When frame parity errors are detected at a serial transport frame receiver (a channel) the corresponding transmitter sends an active parity error bit to the source which indicates to the source that problems may exist with its transmitter. When predetermined parity error thresholds are exceeded, a systems switchover can be initiated by controller 56 (see Figures 2 and 3).

The "X's" represent "don't care" bits; that is, bits which may be either 1 or 0. These bits do not have any relevance with regard to synchronization.

Serial Transport Frame VI Channel

The VI channel which can be one or more of the channels of a serial transport frame format, provides the alarm, provisioning and communication channel used between various modules comprising devices such as, the terminal multiplexer 22 and the add/drop multiplexer 24 shown in Figure 1. The format of this channel is suitable for both message communications between intelligent sub-systems, such as central processors, and register oriented control of non-intelligent devices, such as DS-1 transceivers. The format uses the entire 128 kilobits per second bandwidth of each channel (4.096 megabits/sec divided by 32 = 128 kilobits/sec). Half of the bandwidth (bits 8 - 15, see Figure 8), 64 kilobits, is dedicated to control and synchronization of the receiving device while the remaining 64 kilohertz bandwidth (bits 0 - 7) is used for data transfer. The format of the VI channel is transparent to the serial transport frame format channel in general. Bit 8 is the valid data, V, bit, bit 9 is the interrupt, I, bit, bits 10 - 14 are offset bits and bit 15 is the channel parity bit.

The V bit indicates that the data presented in bits 0 - 7 is valid while the I bit represents an interrupt for high priority data. The offset bits are used to specify a specific control register for offset within a message buffer where the data is to be delivered.

## Claims

1. Serial transport frame format method for positioning information to be transferred between modules within devices for use in synchronous optical communications, the information to be transferred in a serial bit stream, the information including data (bits 0-7) representing information to be transferred, control information (bits 8-15) and synchronizing data (channel #0), the information to be arranged in frames, wherein each frame comprises N channels (channels 0-31), each channel having a fixed length of bits (bits 0-15), where N is an integer greater than one; for each of M (channels 1 to 31) of said N channels, where M is an integer less than N, data representing information to be transferred is placed in one portion of the channel (bits 0-7); for each of said M channels, control information related to said data within each said channel is placed in a second portion of said channel (bits 8-15); wherein synchronization data associated with said frame (channel 0) is placed in at least one of the N-M remaining channels (channel 0) of each frame; characterized in that for at least one of the M channels of each frame the control information includes at least a valid bit (V bit 8) and an interrupt bit (I bit 9) in the second portion of the channel, the valid bit indicating whether the data in the first portion of the channel is valid, and the interrupt bit representing an interrupt for high priority data, the second portion of said channel including associated address bits (bits 10-14) specifying where data in the first portion of the channel is to be transferred.

2. A method as claimed in claim 1, wherein the channel associated control information (bits 8-15) for at least some of the channels of each frame comprises signalling information associated with the corresponding data (bits 0-7) in the first portion of the channel.

3. A method as claimed in claim 1 or 2, wherein the channel associated control information (bits 8-15) for at least some of the channels of each frame contains timing information associated with the data (bits 0-7) in the first portion of the channel.

4. A method as claimed in claims 1 or 3, wherein the channel associated control information (bits 8-15) for at least some of the channels further comprises parity information associated with the remaining data (bits 0-7) in the channel.

5. A method as claimed in claim 1, wherein the second portion of the channel (channel 0) that contains synchronization information contains information regarding the A or B path (bits 8, 9) for the transfer of information in systems comprising redundant A and B paths for the transfer of information between two locations.

6. A method as claimed in claim 5, wherein the second portion (bits 8-15) of the channel (channel 0) that contains synchronization information further comprises clocking information (bits 10-13) related to the serial transport frame.

7. A method as claimed in claim 6, wherein the second portion of the channel (channel 0) that contains synchronization information comprises parity information (PE, bit 0) related to the serial transport frame.

8. A method as claimed in claim 7, wherein the second portion of the channel that contains synchronization information further comprises parity information (P, bit 15) related to the channel itself.

**Patentansprüche**

1.  Verfahren für ein serielles Transportrahmenformat, um Information, die zwischen Modulen innerhalb von bei der synchronen optischen Übertragung verwendeten Bauteilen übertragen wird, in einen seriellen Bitstrom einzufügen, wobei die Information Daten (Bits 0-7), die übertragen werden sollen, Steuerinformation (Bits 8-15) und Synchronisierungsdaten (Kanal #0) enthält, wobei jeder Rahmen N Kanäle (Kanal 0-31) hat, N ist eine ganze Zahl größer als 1, und jeder Kanal eine feste Anzahl von Bit (Bits 0-15) hat, wobei in M (Kanal 1 - 31) der N Kanäle, dabei ist M eine ganze Zahl kleiner als N, in jeden Kanal Daten von zu übertragender Information in einen Teil des Kanals (Bits 0-7) gesetzt werden, wobei in jeden der M Kanäle eine Steuerinformation, die die innerhalb eines jeden Kanals vorhandenen Daten betreffen, in einen zweiten Teil (Bits 8-15) des Kanals gesetzt wird, und wobei Synchronisierungsdaten, die den Rahmen (Kanal 0) betreffen, in mindestens einen der verbleibenden N-M Kanäle (Kanal 0) eines jeden Rahmens gesetzt werden,

    **dadurch gekennzeichnet**, daß bei mindestens einem der M Kanäle eines jeden Rahmens die Steuerinformation mindestens ein Gültigkeitsbit (valid bit) (V Bit 8) und ein Unterbrechungsbit (interrupt bit) (I Bit 9) im zweiten Teil des Rahmens hat, dabei zeigt das Gültigkeitsbit an, ob die Daten im ersten Teil des Kanals gültig sind, und das Unterbrechungsbit bedeutet dabei eine Unterbrechung für Daten mit einer hohen Priorität, und daß der zweite Teil des Kanals zugehörige Adressenbit (Bits 10-14) hat, die angeben, wohin die Daten im ersten Teil übertragen werden sollen.

2.  Ein Verfahren nach Anspruch 1, bei dem die zu einem Kanal gehörige Steuerinformation (Bits 8-15) für mindestens einige der Kanäle eines jeden Rahmens Signalisierungsinformation enthält, die die entsprechenden Daten (Bits 0-7) im ersten Teil des Kanals betreffen.

3.  Ein Verfahren nach Anspruch 1 oder 2, bei dem die zu einem Kanal gehörige Steuerinformation (Bits 8-15) für mindestens einige der Kanäle eines jeden Rahmens Taktinformation enthält, die die Daten (Bits 0-7) im ersten Teil des Kanals betreffen.

4.  Ein Verfahren nach Anspruch 1 oder 3, bei dem die zu einem Kanal gehörige Steuerinformation (Bits 8-15) für mindestens einige der Kanäle eines jeden Rahmens ferner Paritätsinformation enthält, die die verbleibenden Daten (Bits 0-7) im Kanal betrifft.

5.  Ein Verfahren nach Anspruch 1, bei dem der zweite Teil des Kanals (Kanal 0), der Synchronisierungsinformation enthält, Information enthält, die die A- oder B-Pfade (Bits 8, 9) für die Übertragung von Information in Systemen betrifft, die redundante A- und B-Pfade haben, um Information zwischen zwei Orten zu Übertragen.

6.  Ein Verfahren nach Anspruch 5, bei dem der zweite Teil (Bits 8-15) des Kanals (Kanal 0), der Synchronisierungsinformation enthält, ferner Taktinformation (Bits 10-13) enthält, die den seriellen Transportrahmen betrifft.

7.  Ein Verfahren nach Anspruch 6, bei dem der zweite Teil des Kanals (Kanal 0), der Synchronisierungsinformation enthält, Paritätsinformation (PE, Bit 0) enthält, die den seriellen Transportrahmen betrifft.

8.  Ein Verfahren nach Anspruch 7, bei dem der zweite Teil des Kanals, der Synchronisierungsinformation enthält, ferner Paritätsinformation (P, Bit 15) enthält, die den Rahmen selbst betrifft.

**Revendications**

1.  Procédure de format de trame pour transport série pour positionner une information à transférer entre des modules existant dans des dispositifs prévus pour emploi dans des communications optiques synchrones, l'information devant être transférée dans un train de bits série, l'information comportant des données (bits 0 - 7), représentant l'information à transférer, une information de commande (bits 8 - 15) et des données de synchronisation (canal n°0), l'information devant être disposée en trames, procédure dans laquelle chaque trame comporte N canaux (canaux 0-31), chaque canal ayant une longueur fixe de bits (bits 0-15), N étant un entier supérieur à un; pour chacun de M canaux (canaux 1 à 31) desdits N canaux, M étant un entier inférieur à N, les données représentant l'information à transférer étant placées dans une portion du canal (bits 0 -7), pour chacun desdits M canaux, l'information de commande relative auxdites données placées dans chaque dit canal est placée dans une seconde portion dudit canal (bits 8 - 15); procédure dans laquelle les données de synchronisation associées à chaque trame (canal 0) sont placées dans au moins l'un des N-M canaux restants (canal 0) de chaque trame; caractérisée par le fait que pour au moins un des M canaux de chaque trame, l'information de commande inclut au moins un bit de validité (bit V 8) et un bit d'interruption (bit I 9) dans la seconde portion du canal, le bit de validité indiquant si, oui ou non, les données contenues dans la première portion du canal sont valides et le bit d'interruption représentant une interruption pour des données de haute priorité, la seconde portion dudit canal incluant des bits indiquant des adresses associées (bits 10 - 14) spécifiant où les données contenues dans la première portion du canal doivent être transférées.

2. Procédure comme revendiqué dans la revendication 1, dans laquelle l'information de commande associée au canal (bits 8-15) pour au moins certains des canaux de chaque trame comporte une information de signalisation associée aux données correspondantes (bits 0-7) contenues dans la première portion du canal.

3. Procédé comme revendiqué dans la revendication 1 ou 2, dans laquelle l'information de commande associée au canal (bits 8-15) pour au moins certains des canaux de chaque trame contient une information de temporisation associée aux données (bits 0-7) contenues dans la première portion du canal.

4. Procédure comme revendiqué dans la revendication 1 ou 3, dans laquelle l'information de commande associée au canal (bits 8-15) pour au moins pour au moins certains des canaux comporte en outre une information de parité associée aux données restantes (bits 0-7) contenues dans le canal.

5. Procédure comme revendiqué dans la revendication 1, dans laquelle la seconde portion du canal (canal 0) qui contient une information de synchronisation contient une information concernant le chemin A ou B (bits 8, 9) pour le transfert d'information dans des systèmes comprenant des chemins A et B redondants pour le transfert d'information entre deux positions.

6. Procédé comme revendiqué dans la revendication 5, dans laquelle la seconde portion (bits 8-15) du canal (canal 0) qui contient l'information de synchronisation comporte en outre une information de synchronisation (bits 10-13) relative à la trame pour transport série.

7. Procédure comme revendiqué dans la revendication 6, dans laquelle la seconde portion du canal (canal 0) qui contient l'information de synchronisation comporte une information de parité (PE, bit 0) relative à la trame pour transport série.

8. Procédure comme revendiqué dans la revendication 7, dans laquelle la seconde portion du canal qui contient l'information de synchronisation comporte en outre une information de parité (P, bit 15) relative au canal lui-même.

FIG.1

SONET STANDARDS

BYTE MUX

VT MUX

PCM MUX

| Label | Rate |
|---|---|
| OC-48 | 2488.32 Mb/s |
| OC-12 | 622.08 Mb/s |
| OC-3 | 155.52 Mb/s |
| OC-1 | 51.84 Mb/s |
| STSX-1* | 51.84 Mb/s |
| DSX-3 | 44.736 Mb/s |
| DSX-1 | 1.544 Mb/s |
| DS-0/VF | 64 Kb/s |

FTS 150 — 20

STSX-1*

TM 50 — 28, 22

ADM 50 — 24

ACCESS MODULE — 40

NETWORK MANAGER — 48

44, 42, 43, 41, 32, 34, 30, 38

EP 0 397 139 B1

FIG.2

|  |  | BITS |  |  |  |  |  |  |  |  |  |  |  |  |  |  |  |  |
|---|---|---|---|---|---|---|---|---|---|---|---|---|---|---|---|---|---|---|
| CHANNEL # | | 0 | 1 | 2 | 3 | 4 | 5 | 6 | 7 | 8 | 9 | 10 | 11 | 12 | 13 | 14 | 15 | |
| | | D0 | D1 | D2 | D3 | D4 | D5 | D6 | D7 | C0 | C1 | C2 | C3 | C4 | C5 | C6 | C7 | |
| 0 | | PE | S | S | S | S | S | S | S | A | B | C0 | C0 | C0 | C0 | C0 | P | (sync channel) |
| 1 | | | | | | | | | | | | | | | | | | |
| 2 | | | | | | | | | | | | | | | | | | |
| 3 | | | | | | | | | | | | | | | | | | |
| 4 | | | | | | | | | | | | | | | | | | |
| 5 | | | | | | | | | | | | | | | | | | |
| 6 | | | | | | | | | | | | | | | | | | |
| 7 | | | | | | | | | | | | | | | | | | |
| 8 | | | | | | | | | | | | | | | | | | |
| 9 | | | | | | | | | | | | | | | | | | |
| 10 | | | | | | | | | | | | | | | | | | |
| 11 | | | | | | | | | | | | | | | | | | |
| 12 | | | | | | | | | | | | | | | | | | |
| 13 | | | | | | | | | | | | | | | | | | |
| 14 | | | | | | | | | | | | | | | | | | |
| 15 | | | | | | | | | | | | | | | | | | |
| 16 | | | | | | | | | | | | | | | | | | |
| 17 | | | | | | | | | | | | | | | | | | |
| 18 | | | | | | | | | | | | | | | | | | |
| 19 | | | | | | | | | | | | | | | | | | |
| 20 | | | | | | | | | | | | | | | | | | |
| 21 | | | | | | | | | | | | | | | | | | |
| 22 | | | | | | | | | | | | | | | | | | |
| 23 | | | | | | | | | | | | | | | | | | |
| 24 | | | | | | | | | | | | | | | | | | |
| 25 | | | | | | | | | | | | | | | | | | |
| 26 | | | | | | | | | | | | | | | | | | |
| 27 | | | | | | | | | | | | | | | | | | |
| 28 | | | | | | | | | | | | | | | | | | |
| 29 | | | | | | | | | | | | | | | | | | |
| 30 | | | | | | | | | | | | | | | | | | |
| 31 | | | | | | | | | | | | | | | | | | |

DATA          ASSOCIATED CONTROL